# EUROPÄISCHE PATENTSCHRIFT

(11) **EP 2 766 620 B1**
(45) Veröffentlichungstag und Bekanntmachung des Hinweises auf die Patenterteilung: **22.02.2017**
(21) Anmeldenummer: 12783540.3
(22) Anmeldetag: 10.10.2012
(51) Int. Cl.: F16C 29/04, B66C 23/70

(54) **TELESKOPIERENDES FÜHRUNGSSYSTEM**
TELESCOPING GUIDE SYSTEM
SYSTÈME DE GUIDAGE TÉLESCOPIQUE

(30) Priorität: 10.10.2011 DE 102011054332
(43) Veröffentlichungstag der Anmeldung: 20.08.2014
(73) Patentinhaber: WHN Technologies GmbH, 83355 Grabenstätt (DE)
(72) Erfinder: ARKHIPOV, Gleb, 40789 Monheim am Rhein (DE); WALLNER, Nicole, 83334 Inzell (DE)
(74) Vertreter: Naessens, Stephan
(86) Internationale Anmeldenummer: PCT/EP2012/070048
(87) Internationale Veröffentlichungsnummer: WO 2013/053748

(56) Entgegenhaltungen:
- AT-B1- 505 859
- CA-A1- 2 569 418
- DE-U1- 29 705 117
- US-A- 3 887 247
- US-A1- 2011 240 817

## Beschreibung

Die Erfindung betrifft ein teleskopierendes Führungssystem, das ein Außenrohr und ein zumindest teilweise innerhalb des Außenrohres geführtes Innenrohr umfasst.

Eine bekannte Bauform von Führungssystemen sind ineinander laufende Profile mit Gleitführungselementen. Solche Gleitführungselemente erfordern ein entsprechendes Spiel, was wiederum bei einer Belastung des Führungssystems mit Querkräften und/oder Momenten zu Reibung und zu entsprechenden Reibungsverlusten führt.

Eine andere bekannte Bauform von teleskopierenden Führungssystemen sind ineinander laufende Profile mit integrierten Linearführungssystemen, beispielsweise Kugelumlaufführungen. Bei diesen bekannten Bauformen werden an einem der ineinander laufenden Profile Führungsschienen und an dem anderen Profil ein komplementär zur Führungsschiene ausgebildeter Führungsschlitten mit Rollen, Kugelketten oder ähnlichem montiert. Ein Nachteil dieser Bauform ist es, dass diese einen hohen Platzbedarf und eine sehr genaue Fertigung erfordert und darüber hinaus die Belastbarkeit eines solchen Führungssystems auf eine vorbestimmte Richtung beschränkt ist. Eine weitere bekannte Bauform sind ineinander laufende Profile mit externen Linearführungssystemen, beispielsweise Wellenführungen mit Kugelbuchsen. Das externe Vorsehen von Linearführungssystemen an den eigentlichen teleskopierenden Profilen benötigt ebenfalls einen großen Platzbedarf und stellt ferner ein Sicherheitsrisiko dar, da ohne das Vorsehen entsprechender Schutzabdeckungen Verletzungen an den externen Linearführungssystemen auftreten können.

Die Druckschrift CA 2 569 418 A1 beschreibt ein gattungsgemäßes teleskopierendes Führungssystem mit einem Außenprofil und einem teilweise innerhalb des Profiles geführten Innenprofiles. An dem Außenprofil ist eine Führungseinheit mit zwei Rollen vorgesehen, die mit ihren Mantelflächen die Außenseite des Innenprofiles kontaktieren. An dem Innenprofil ist eine zweite Führungseinheit vorgesehen, die ebenfalls zwei Rollen umfasst, die mit ihren Mantelflächen die Innenseite des Außenprofiles berühren. Aus der Druckschrift US 2011/0240817 A1 ist eine Anordnung mit teleskopierbaren Außen- und Innenrohren bekannt.

Es ist Aufgabe der Erfindung, ein teleskopierendes Führungssystem anzugeben, das leichtgängig und kompakt aufgebaut ist und eine Verdrehsicherung aufweist.

Diese Aufgabe wird durch ein teleskopierendes Führungssystem mit den Merkmalen des Anspruchs 1 gelöst. Vorteilhafte Weiterbildungen der Erfindungen sind in den abhängigen Ansprüchen angegeben.

Das teleskopierende Führungssystem umfasst eine erste Führungseinheit, die an dem Außenrohr angeordnet ist und eine erste Rolle und mindestens eine zweite Rolle umfasst. Diese beiden Rollen sind derart angeordnet, dass sie mit ihren Mantelflächen die Außenseite des Innenrohres kontaktieren. Ferner umfasst das Führungssystem eine an dem Innenrohr angeordnete zweite Führungseinheit, die ebenfalls eine erste und mindestens eine zweite Rolle aufweist. Die beiden Rollen der zweiten Führungseinheit kontaktieren mit ihren Mantelflächen die Innenseite des Außenrohres.

Durch die Führung des Innenrohres in dem Außenrohr über die beiden Führungseinheiten wird eine gleichmäßige leichtgängige Führung des Innenrohres in dem Außenrohr erreicht, so dass nur geringe Reibungsverluste auftreten und das Führungssystem entsprechend leichtgängig ist. Damit ist das Führungssystem sehr kompakt aufgebaut, da die beiden Rohre selbst die Linearführung bilden und keine zusätzliche Linearführung vorgesehen sein muss.

Erfindungsgemäß ist an der Innenfläche des Außenrohres insbesondere eine in Längsrichtung des Außenrohres verlaufende Schiene angeordnet, die in eine komplementär zu ihr ausgebildete Aussparung der zweiten Führungseinheit eingreift. Hierdurch wird ein Verdrehen des Innenrohres relativ zum Außenrohr vermieden.

Die zweite Führungseinheit weist insbesondere zwei federnd gelagerte Führungsrollen auf, die die Aussparung begrenzen und die die Schiene kontaktieren, so dass selbst bei dem Auftreten von Torsionskräften die Leichtgängigkeit des Führungssystems erhalten bleibt, da über die Schiene und die Führungsrolle eine leichtgängige Verdrehsicherung ausgebildet ist.

Die erste Führungseinheit ist insbesondere ortsfest an dem Außenrohr angeordnet, d.h., dass die erste Führungseinheit und das Außenrohr nicht relativ zueinander bewegbar sind. Entsprechend ist die zweite Führungseinheit vorzugsweise ortsfest an dem Innenrohr angeordnet.

Das Innenrohr und das Außenrohr sind insbesondere in ihrer Längsrichtung gesehen relativ zueinander bewegbar. In einem ausgefahrenen Zustand ist das Innenrohr insbesondere um eine voreingestellte Länge aus dem Außenrohr verfahren, wobei es in einem eingefahrenen Zustand dagegen vollständig oder zumindest nahezu vollständig innerhalb des Außenrohres angeordnet ist. Beim Verfahren des Innenrohres relativ zum Außenrohr wird die zweite Führungseinheit zusammen mit dem Innenrohr verfahren, wohingegen die erste Führungseinheit nicht bewegt wird.

Bei einer bevorzugten Ausführungsform umfasst die erste Führungseinheit und/oder die zweite Führungseinheit jeweils vorzugsweise mindestens eine weitere dritte Rolle. Die dritte Rolle der ersten Führungseinheit ist derart angeordnet, dass ihre Mantelfläche die Außenseite des Innenrohres kontaktiert, wohingegen die dritte Rolle der zweiten Führungseinheit derart angeordnet ist, dass ihre Mantelfläche die Innenseite des Außenrohres kontaktiert. Bei einer besonders bevorzugten Ausführungsform umfassen beide Führungseinheiten jeweils vier Rollen, wobei die Rollen der ersten Führungseinheit mit ihren Mantelflächen die Außenseite des Innenrohres und die Rollen der zweiten Führungseinheit mit ihren Mantelflächen die Innenseite des Außenrohres kontaktieren.

Durch das Vorsehen von drei oder sogar vier Rollen bei einer der beiden Führungseinheiten oder bei beiden Führungseinheiten wird erreicht, dass die auf das Führungssystem einwirkenden Kräfte, unabhängig davon, wie sie gerichtet sind, nahezu gleichmäßig über den gesamten Umfang des Außenrohres bzw. Innenrohres übertragen werden und somit vermieden wird, dass punktuell hohe Lasten auftreten. Ferner wird somit die Leichtgängigkeit des Systems unterstützt.

Die Rollen der ersten Führungseinheit sind insbesondere derart angeordnet, dass ihre Längsachsen in einer ersten Ebene liegen. Diese erste Ebene ist insbesondere orthogonal zur Längsachse des Außenrohres und/oder zur Längsachse des Innenrohres angeordnet. Die Längsachsen des Außenrohres und des Innenrohres sind insbesondere parallel zueinander, vorzugsweise fallen die beiden Längsachsen zusammen.

Entsprechend sind auch die Rollen der zweiten Führungseinheit insbesondere derart angeordnet, dass ihre Längsachsen in einer gemeinsamen zweiten Ebene liegen. Diese zweite Ebene ist insbesondere orthogonal zur Längsachse des Außenrohres und/oder zur Längsachse des Innenrohres angeordnet. Somit sind die erste Ebene und die zweite Ebene insbesondere parallel zueinander angeordnet.

Die Rollen der ersten Führungseinheit und die Rollen der zweiten Führungseinheit sind insbesondere derart angeordnet, dass ihre Längsachsen nicht parallel zu der Längsachse des Innenrohres und zur Längsachse des Außenrohres verlaufen. Bei einem Verfahren des Innenrohres relativ zum Außenrohr rollen die Rollen der ersten Führungseinheit und/oder die Rollen der zweiten Führungseinheit insbesondere in Richtung der Längsachse des Außenrohres und der Längsachse des Innenrohres auf der Innenseite des Außenrohres bzw. der Außenseite des Innenrohres ab.

Die Rollen der ersten Führungseinheit sind insbesondere derart angeordnet, dass zueinander benachbarte Rollen jeweils den gleichen Winkelabstand zueinander haben. Vorzugsweise sind auch die Rollen der zweiten Führungseinheit derart angeordnet, dass benachbarte Rollen jeweils den gleichen Winkelabstand zueinander haben. Bei drei Rollen haben die benachbarten Rollen somit einen Winkelabstand von 120°, bei vier Rollen einen Winkelabstand von 90° zueinander. Dadurch wird erreicht, dass, unabhängig davon, in welcher radialen Richtung das teleskopierende Führungssystem mit Querkräften belastet wird, diese ohne Auftreten von Spannungsspitzen zuverlässig zwischen dem Innenrohr und dem Außenrohr übertragen werden können, so dass die Leichtgängigkeit gewahrt bleibt.

Ferner ist es vorteilhaft, wenn die erste Führungseinheit und die zweite Führungseinheit jeweils eine dritte und mindestens eine vierte Rolle umfassen, wobei die erste und die zweite Rolle jeweils in einer dritten Ebene und die dritte und die vierte Rolle jeweils in einer vierten Ebene angeordnet sind. Die dritten Ebenen und die vierten Ebenen sind parallel zueinander angeordnet. Somit wird erreicht, dass die erste Führungseinheit und/oder die zweite Führungseinheit jeweils derart aufgebaut ist, dass ihre Rollen in zwei parallel zueinander verlaufenden Ebenen angeordnet sind. Hierdurch wird erreicht, dass die Kräfte gleichmäßig über den gesamten Umfang übertragen werden können. Durch das Anordnen der Rollen in zwei Ebenen, insbesondere das relativ zueinander versetzte Anordnen der Rollen in diesen beiden Ebenen können größere Rollen als bei dem Anordnen in nur einer Ebene verwendet werden, so dass eine noch bessere Kraftübertragung möglich ist.

Bei einer besonders bevorzugten Ausführungsform umfasst die erste Führungseinheit und/oder die zweite Führungseinheit jeweils eine fünfte und mindestens eine sechste Rolle, wobei die fünfte Rolle jeweils in der dritten Ebene und die sechste Rolle jeweils in der vierten Ebene angeordnet sind. Somit umfassen die Führungseinheiten in ihren beiden Ebenen jeweils drei Rollen, wobei die Rollen in den beiden Ebenen einer jeden Führungseinheit jeweils insbesondere in Umfangsrichtung versetzt zueinander angeordnet sind.

Bei einer anderen Ausführungsform können die erste Führungseinheit und/oder die zweite Führungseinheit auch jeweils eine siebte und mindestens eine achte Führungsrolle umfassen, wobei die siebte Führungsrolle jeweils in der dritten Ebene und die achte Führungsrolle jeweils in der vierten Ebene angeordnet ist. Somit umfasst die Führungseinheit bei diesem Ausführungsbeispiel jeweils acht Rollen, von denen jeweils vier in einer Ebene angeordnet sind. Auch in diesem Fall sind die Rollen der beiden Ebenen in Umfangsrichtung gesehen vorzugsweise relativ zueinander versetzt angeordnet.

Umso mehr Rollen je Ebene vorgesehen sind und umso mehr Ebenen die Führungseinheiten haben, umso gleichmäßiger ist die Kraftübertragung zwischen dem Innenrohr und dem Außenrohr. Somit wird eine besonders kompakte und leichtgängige Bauform erzielt.

Die Rollen sind in den jeweiligen Ebenen vorzugsweise derart angeordnet, dass zueinander benachbarte Rollen einer Ebene jeweils den gleichen Winkelabstand zueinander haben.

Die Rollen der ersten Führungseinheit kontaktieren mit ihren Mantelflächen jeweils die Außenseite des Innenrohres, die Rollen der zweiten Führungseinheit mit ihren Mantelflächen jeweils die Innenseite des Außenrohres.

Alternativ können auch mehr als acht Rollen vorgesehen sein. Darüber hinaus können die Rollen einer jeden Führungseinheit auch in mehr als zwei Ebenen, beispielsweise in drei Ebenen angeordnet sein. Darüber hinaus ist es möglich, dass in den verschiedenen Ebenen einer Führungseinheit unterschiedlich viele Rollen angeordnet sind.

Ferner ist es vorteilhaft, wenn mindestens eine Rolle der ersten Führungseinheit und/oder mindestens eine Rolle der zweiten Führungseinheit eine gewölbte Mantelfläche haben. Insbesondere ist es vorteilhaft, wenn alle Rollen der ersten Führungseinheit und/oder alle Rollen der zweiten Führungseinheit eine gewölbte Mantelfläche haben. Hierbei ist die Mantelfläche der Rollen der ersten Führungseinheit insbesondere derart gewölbt, dass ihre Mantelfläche die Außenseite des Innenrohres in zumindest einem Teilbereich im unbelasteten Zustand entlang einer Linie kontaktiert. Ebenso sind die Mantelflächen der Rollen der zweiten Führungseinheit insbesondere derart gewölbt, dass die Mantelflächen die Innenfläche des Außenrohres zumindest in einem Teilbereich im unbelasteten Zustand entlang einer Linie kontaktiert. Somit wird erreicht, dass die Kraftübertragung nicht nur punktuell, sondern entlang der entsprechenden Kontaktlinien erfolgt, so dass eine gleichmäßige Kraftübertragung gewährleistet ist und die Leichtgängigkeit des teleskopierenden Führungssystems erreicht ist.

Die Mantelflächen der Rollen der ersten Führungseinheit sind insbesondere derart gewölbt, dass sie zumindest in einem Teilbereich den gleichen Krümmungsradius wie die Außenseite des Innenrohres haben. Entsprechend sind die Rollen der zweiten Führungseinheit insbesondere derart gewölbt, dass ihre Mantelflächen den gleichen Krümmungsradius wie die Innenseite des Außenrohres haben. Hierdurch wird zum einen der linienförmige Kontakt zwischen den Rohren und den Rollen erreicht und zum anderen sichergestellt, dass die Rollen optimal auf den entsprechenden Flächen der Rohre abrollen können.

Die Mantelflächen der Rollen der ersten Führungseinheit sind insbesondere konkav ausgebildet. Die Mantelflächen der Rollen der zweiten Führungseinheit sind insbesondere konvex.

Die erste Führungseinheit ist vorzugsweise an einem ersten Ende des Außenrohres angeordnet und die zweite Führungseinheit an einem dem ersten Ende des Außenrohres gegenüberliegenden zweiten Ende des Innenrohres. Somit wird erreicht, dass durch die Anordnung der Führungseinheit an entgegengesetzten Enden der Rohre eine sichere Führung der beiden Rohre relativ zueinander gewährleistet ist.

Die erste Führungseinheit kann insbesondere einen dreh- und ortsfest an dem Außenrohr befestigten Grundkörper aufweisen, an dem die Rollen der ersten Führungseinheit um ihre jeweiligen Längsachsen drehbar gelagert sind. Entsprechend hat auch die zweite Führungseinheit vorzugsweise einen orts- und drehfest an dem Innenrohr befestigten Grundkörper, an dem wiederum die Rollen der zweiten Führungseinheit um ihre jeweilige Längsachse drehbar gelagert sind. Somit wird ein einfacher und kompakter Aufbau der Führungseinheit und somit des gesamten teleskopierenden Führungssystems erreicht.

Die erste Führungseinheit und/oder die zweite Führungseinheit sind vorzugsweise als drehfest an dem entsprechenden Rohr gelagerte omni wheels ausgebildet. Somit wird ein einfacher, kompakter Aufbau des Führungssystems erreicht.

Unter einem Rohr wird insbesondere jeder längliche Hohlkörper aus einem unflexiblen Material verstanden, dessen Länge wesentlich größer ist als sein Durchmesser. Das Innen- und das Außenrohr sind insbesondere als Rundrohr ausgebildet und haben somit vorzugsweise einen ringförmigen Querschnitt. Alternativ können das Innenrohr und/oder das Außenrohr auch einen rechteckigen Querschnitt haben. Insbesondere kann das Außenrohr derart ausgebildet sein, dass sein Außenumfang einen rechteckigen Querschnitt aufweist und dass das Außenrohr einen zylindrischen Innenraum aufweist, in dem das Innenrohr geführt ist.

Das Außenrohr und/oder das Innenrohr sind insbesondere aus Karbon gefertigt, so dass ein besonders leichter Aufbau des Führungssystems erreicht wird.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
- Fig. 1: eine schematische Schnittdarstellung eines Führungssystems gemäß einer ersten Ausführungsform in einem eingefahrenen Zustand;
- Fig. 2: eine schematische Schnittdarstellung des Führungssystems nach Figur 1 in einem ausgefahrenen Zustand;
- Fig. 3: eine schematische, perspektivische Darstellung eines Führungssystems gemäß einer zweiten Ausführungsform;
- Fig. 4: eine um 90° gedrehte, schematische, perspektivische Darstellung des Führungssystems nach Figur 3;
- Fig. 5: eine weitere schematische, perspektivische Darstellung des Führungssystems nach den Figuren 3 und 4;
- Fig. 6: eine um 90° gedrehte, schematische, perspektivische Darstellung des Führungssystems nach Figur 5;
- Fig. 7: eine Explosionsdarstellung des Führungssystems nach den Figuren 3 bis 6 mit Blickrichtung von unten;
- Fig. 8: eine um 90° gedrehte Explosionsdarstellung des Führungssystems nach Figur 7;
- Fig. 9: eine Explosionsdarstellung des Führungssystems nach Figur 7 mit Blick von oben;
- Fig. 10: eine um 90° gedrehte Explosionsdarstellung des Führungssystems nach Figur 9;
- Fig. 11: eine schematische, perspektivische Darstellung einer ersten Führungseinheit des Führungssystems nach den Figuren 3 bis 10;
- Fig. 12: eine um 90° gedrehte, schematische, perspektivische Darstellung der ersten Führungseinheit nach Figur 11;
- Fig. 13: eine weitere schematische, perspektivische Darstellung der ersten Führungseinheit nach den Figuren 11 und 12;
- Fig. 14: eine um 90° gedrehte, schematische, perspektivische Darstellung der ersten Führungseinheit nach Figur 13;
- Fig. 15: eine schematische, perspektivische Darstellung einer zweiten Führungseinheit des Führungssystems nach den Figuren 3 bis 10;
- Fig. 16: eine um 90° gedrehte, schematische, perspektivische Darstellung der zweiten Führungseinheit nach Figur 15;
- Fig. 17: eine weitere schematische, perspektivische Darstellung der zweiten Führungseinheit nach den Figuren 15 und 16;
- Fig. 18: eine um 90° gedrehte, schematische, perspektivische Darstellung der zweiten Führungseinheit nach Figur 17;
- Fig. 19: eine schematische, perspektivische Darstellung der zweiten Führungseinheit nach den Figuren 15 bis 18 und einer Schiene;
- Fig. 20: eine um 90° gedrehte, schematische, perspektivische Darstellung der zweiten Führungseinheit und der Schiene nach Figur 19;
- Fig. 21: eine weitere schematische, perspektivische Darstellung der zweiten Führungseinheit und der Schiene nach den Figuren 19 und 20;
- Fig. 22: eine um 90° gedrehte, schematische, perspektivische Darstellung der zweiten Führungseinheit und der Schiene nach Figur 21;
- Fig. 23: eine schematische, perspektivische Darstellung einer ersten Führungseinheit gemäß einer dritten Ausführungsform;
- Fig. 24: eine um 90° gedrehte, schematische, perspektivische Darstellung der ersten Führungseinheit nach Figur 23;
- Fig. 25: eine weitere schematische, perspektivische Darstellung der ersten Führungseinheit nach den Figuren 23 und 24;
- Fig. 26: eine um 90° gedrehte, schematische, perspektivische Darstellung der ersten Führungseinheit nach Figur 25;
- Fig. 27: eine schematische, perspektivische Darstellung einer zweiten Führungseinheit gemäß einer vierten Ausführungsform;
- Fig. 28: eine um 90° gedrehte ,schematische, perspektivische Darstellung der zweiten Führungseinheit nach Figur 27;
- Fig. 29: eine weitere schematische, perspektivische Darstellung der zweiten Führungseinheit nach den Figuren 27 und 28;
- Fig. 30: eine um 90° gedrehte, schematische, perspektivische Darstellung der zweiten Führungseinheit nach Figur 29;
- Fig. 31: eine schematische, perspektivische Darstellung eines Führungssystems gemäß einer fünften Ausführungsform in einem eingefahrenen Zustand;
- Fig. 32: eine schematische, perspektivische Darstellung eines Führungssystems nach Figur 31 in einem ausgefahrenen Zustand;
- Fig. 33: eine schematische, perspektivische Darstellung eines Ausschnitts des Führungssystems nach Figur 32;
- Fig. 34: eine weitere schematische, perspektivische Darstellung des Führungssystems nach den Figuren 31 bis 33 im eingefahrenen Zustand; und
- Fig. 35: eine weitere schematische, perspektivische Darstellung des Führungssystems nach den Figuren 31 bis 34 im ausgefahrenen Zustand.

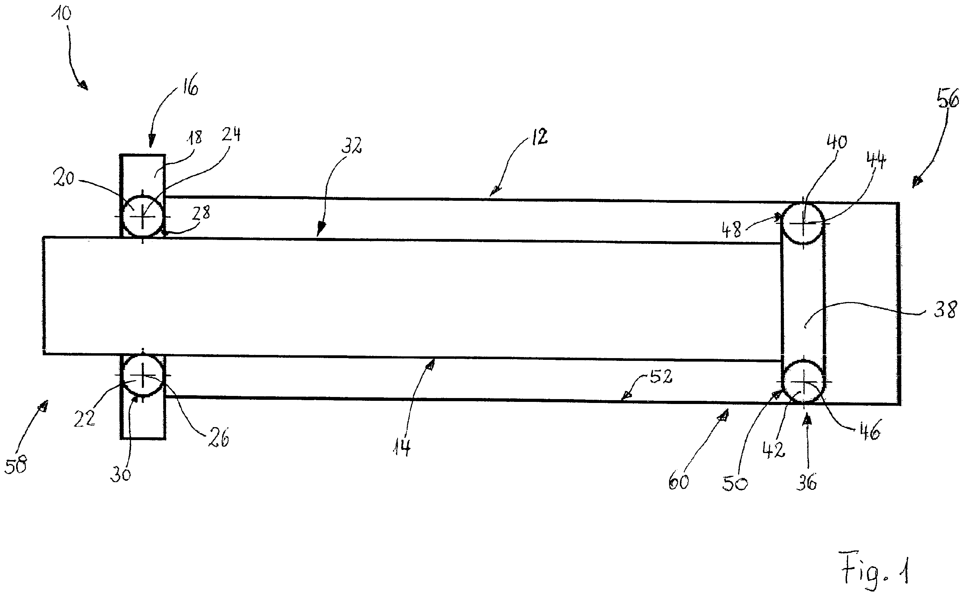

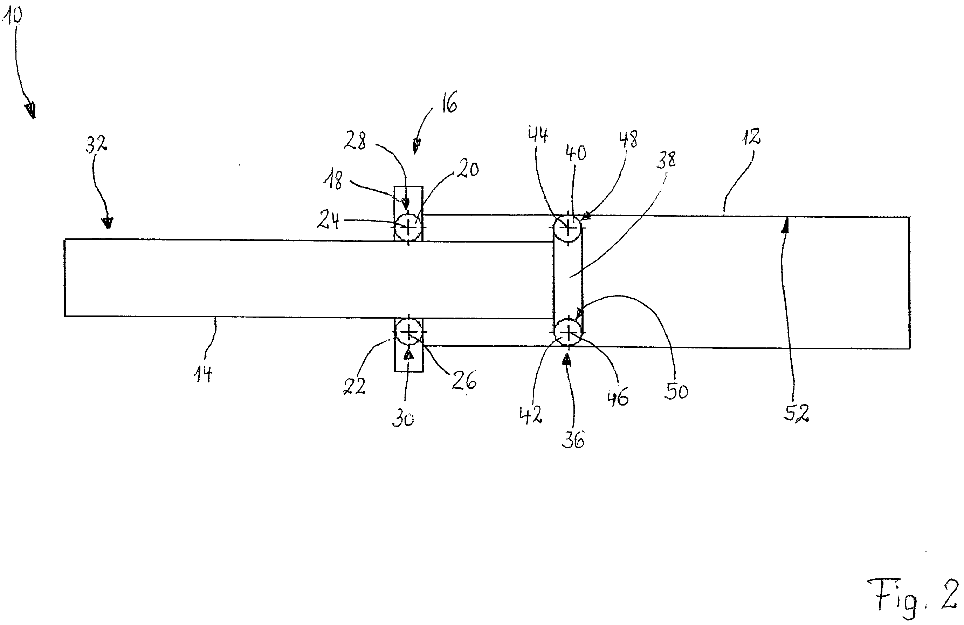

In den Figuren 1 und 2 ist jeweils eine schematische Schnittdarstellung eines teleskopierenden Führungssystems 10 gemäß einer ersten Ausführungsform dargestellt, wobei in Figur 1 ein eingefahrener Zustand und in Figur 2 ein ausgefahrener Zustand gezeigt ist.

Das Führungssystem 10 umfasst ein Außenrohr 12 und ein zumindest teilweise innerhalb dieses Außenrohres 12 geführtes Innenrohr 14. Das Innenrohr 14 ist zumindest teilweise in einem Innenraum des Außenrohres 12 aufgenommen.

An dem Außenrohr 12 ist eine erste Führungseinheit 16 angeordnet, die einen orts- und drehfest mit dem Außenrohr 12 verbundenen Grundkörper 18 sowie zwei Rollen 20, 22 umfasst. Die beiden Rollen 20, 22 sind relativ zum Grundkörper 18 um ihre Längsachsen 24, 26 drehbar gelagert. Die Rollen 20, 22 kontaktieren mit ihren Mantelflächen 28, 30 die Außenseite 32 des Innenrohres 14. Die Rollen 20, 22 sind an gegenüberliegenden Seiten des Innenrohres 14 angeordnet und haben somit insbesondere einen Winkelabstand von 180° zueinander.

Ferner umfasst das Führungssystem 10 eine zweite Führungseinheit 36, die einen fest mit dem Innenrohr 14 verbundenen Grundkörper 38 sowie zwei Rollen 40, 42 umfasst. Der Grundkörper 38 ist orts- und drehfest mit dem Innenrohr 14 verbunden, wobei die Rollen 40, 42 um ihre Längsachsen 44, 46 drehbar an dem Grundkörper 38 gelagert sind. Die Rollen 40, 42 sind derart angeordnet, dass sie mit ihren Mantelflächen 48, 50 die Innenseite 52 des Außenrohres 12 kontaktieren. Auch die Rollen 40, 42 der zweiten Führungseinheit 36 haben insbesondere einen Winkelabstand von 180° zueinander, so dass sie an gegenüberliegenden Seiten des Innenrohres 14 angeordnet sind.

Das Außenrohr 12 hat ein erstes Ende 54 und ein zweites Ende 56. Ebenso hat das Innenrohr 14 ein erstes Ende 58 und ein zweites Ende 60, wobei das erste Ende 58 des Innenrohres 14 aus dem ersten Ende 54 des Außenrohres 12 sowohl im eingefahrenen als auch im ausgefahrenen Zustand hinausragt. Das erste Ende 58 des Innenrohres 14 ragt im eingefahrenen Zustand nur wenig aus dem ersten Ende 54 des Außenrohres heraus, im ausgefahrenen Zustand dagegen ist das Innenrohr 14 nahezu vollständig aus dem Außenrohr 12 herausbewegt.

Das Außenrohr 12 und das Innenrohr 14 sind derart angeordnet, dass ihre Längsachsen parallel zueinander verlaufen, insbesondere zusammenfallen. Das Bewegen von dem eingefahrenen in den ausgefahrenen Zustand und umgekehrt erfolgt durch ein Bewegen des Innenrohres 14 relativ zum Außenrohr 12 in axialer Richtung der Rohre 12, 14.

Die erste Führungseinheit 16 ist am ersten Ende 54 des Außenrohres 12 angeordnet. Die zweite Führungseinheit 36 ist an dem dem ersten Ende 54 des Außenrohres 12 gegenüberliegenden zweiten Ende 60 des Innenrohres 14 angeordnet.

Beim Verfahren des Innenrohres 14 relativ zum Außenrohr 12 rollen die Rollen 20, 22 der ersten Führungseinheit 16 auf der Außenseite 32 des Innenrohres 14 und die Rollen 40, 42 der zweiten Führungseinheit 36 auf der Innenseite 52 des Außenrohres 12 ab. Durch die beiden zuvor beschriebenen Führungseinheiten 16, 36 wird ein besonders kompakter Aufbau des Führungssystems 10 erreicht, da die Rohre 12, 14 selbst als lineare Führungselemente dienen.

Ferner wird durch die beiden Führungseinheiten 16, 36 erreicht, dass das Führungssystem 10 besonders leichtgängig ist, da durch den Kontakt über die Mantelflächen der Rollen 20, 22, 40, 42 eine sichere und zuverlässige Kraftübertragung erfolgt.

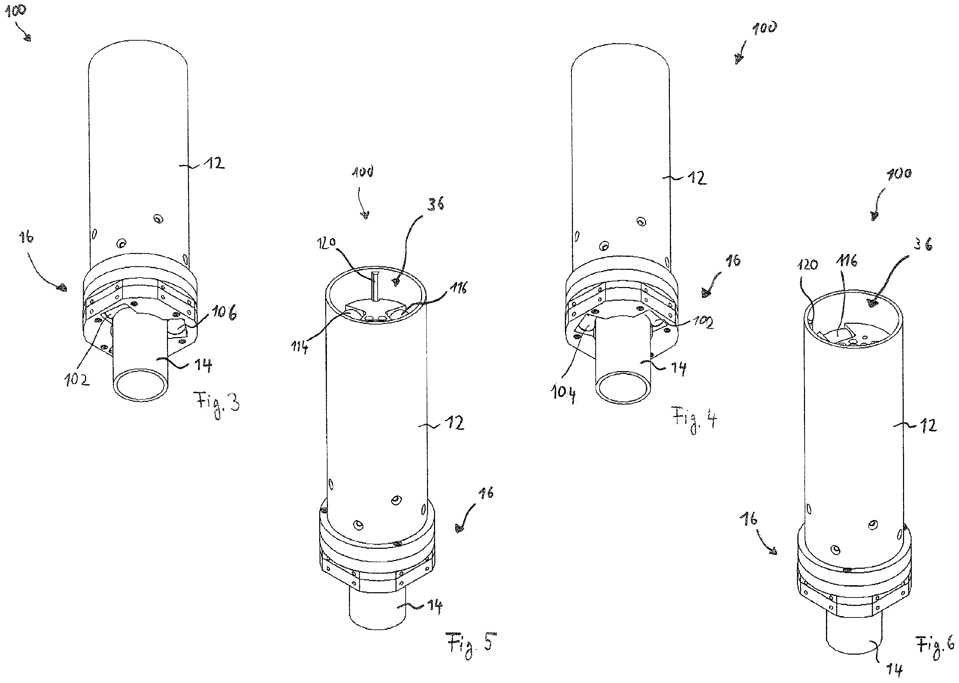

In den Figuren 3 bis 10 ist jeweils eine schematische, perspektivische Darstellung eines teleskopierenden Führungssystems 100 gemäß einer zweiten Ausführungsform gezeigt. Elemente mit gleichem Aufbau oder gleicher Funktion sind mit denselben Bezugszeichen bezeichnet.

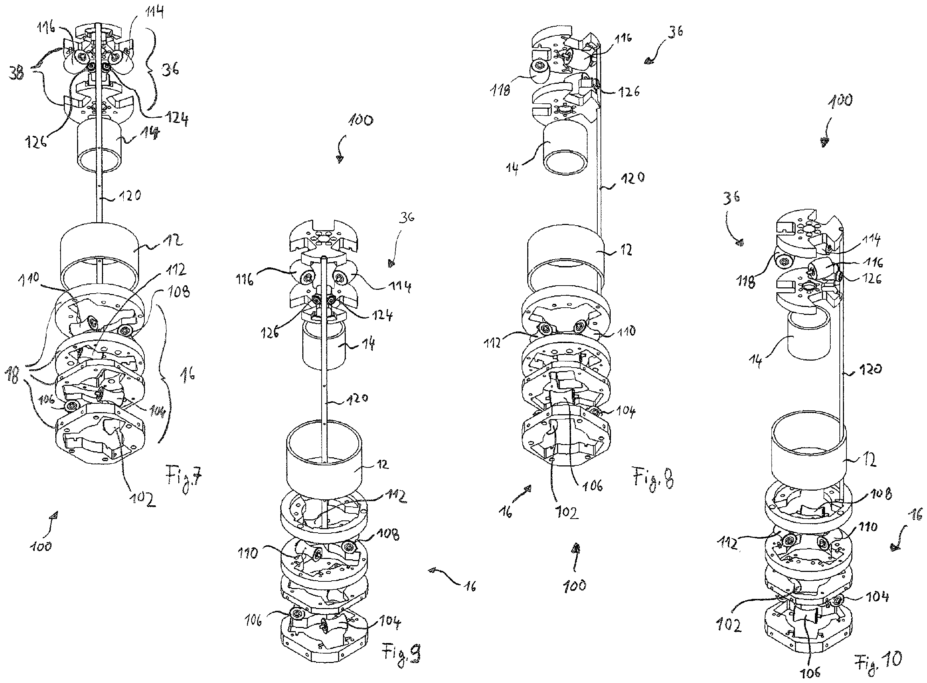

In den Figuren 3 und 4 ist jeweils eine schematische, perspektivische Darstellung des Führungssystems 100 mit Blick auf die Unterseite dargestellt, wobei die Blickrichtung in Figur 4 relativ zur Blickrichtung in Figur 3 um 90° gedreht ist. Die Figuren 5 und 6 zeigen eine schematische, perspektivische Darstellung des Führungssystems 100 mit Blick auf die Oberseite, wobei die Blickrichtung in Figur 6 wiederum um 90° relativ zur Blickrichtung in Figur 5 verdreht ist. In den Figuren 7 bis 10 sind jeweils Explosionsdarstellungen dargestellt, wobei die Figuren 7 und 8 wiederum eine Blickrichtung auf die Unterseite und die Figuren 9 und 10 eine Blickrichtung auf die Oberseite aufweisen. Die Blickrichtung in Figur 8 ist um 90° relativ zur Blickrichtung in Figur 7 gedreht, ebenso die Blickrichtung in Figur 10 relativ zur Blickrichtung in Figur 9.

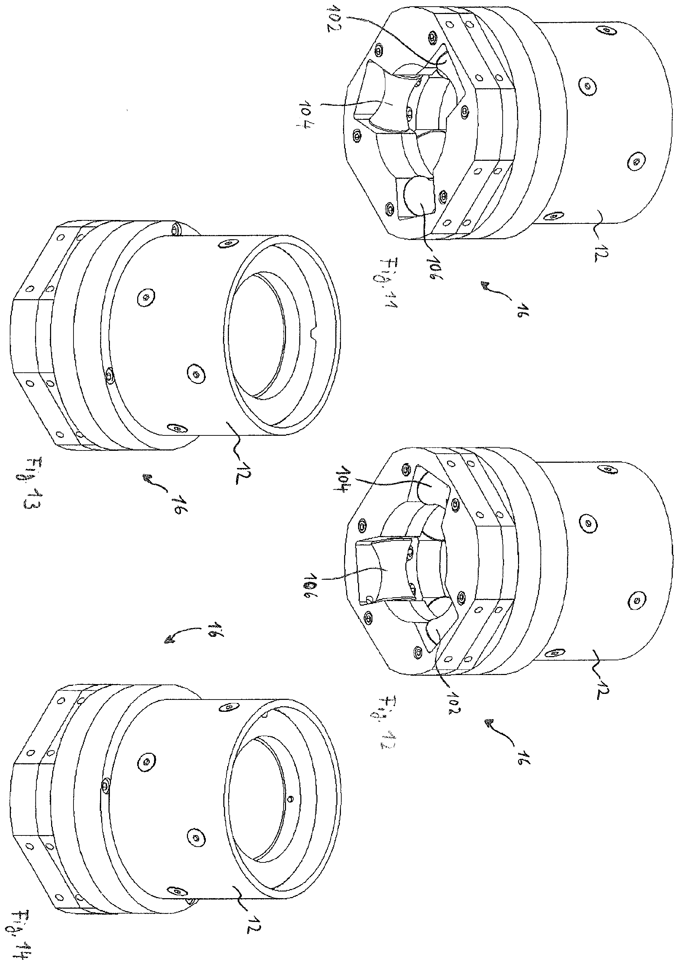

Die Figuren 11 bis 14 zeigen jeweils eine schematische, perspektivische Darstellung der ersten Führungseinheit 16 des Führungssystems 100 nach den Figuren 3 bis 10. Die Figuren 11 und 12 haben wiederum eine Blickrichtung von unten, die Figuren 13 und 14 eine Blickrichtung von oben auf die erste Führungseinheit 16. Die Blickrichtung in Figur 12 ist um 90° relativ zur Blickrichtung in Figur 11, die Blickrichtung in Figur 14 um 90° relativ zur Blickrichtung in Figur 13 gedreht.

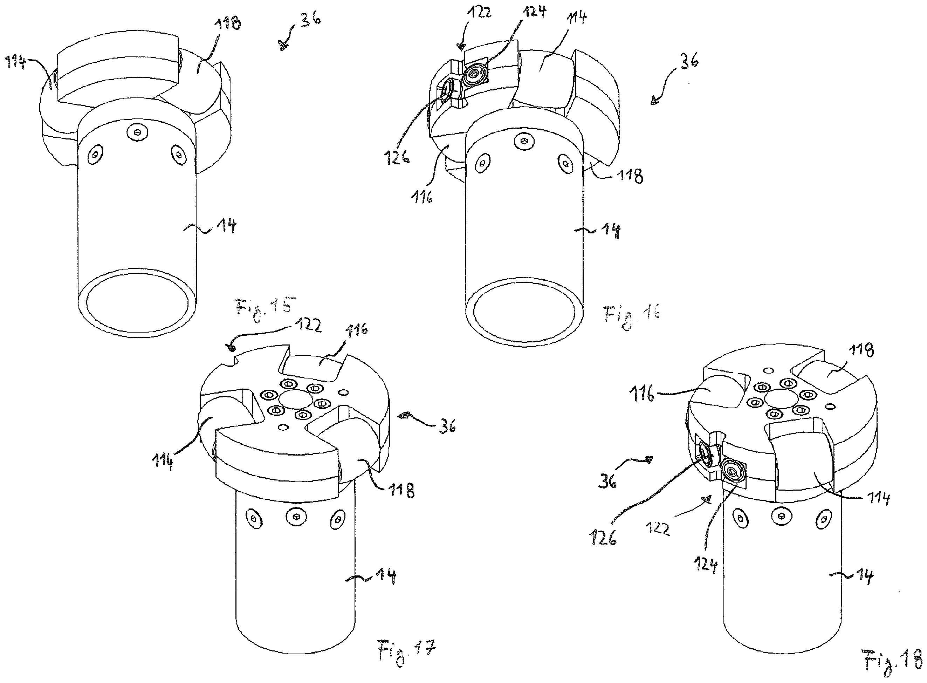

In den Figuren 15 bis 16 ist jeweils eine schematische, perspektivische Darstellung der zweiten Führungseinheit 36 des Führungssystems 100 nach den Figuren 3 bis 10 dargestellt, wobei in den Figuren 15 und 16 wiederum eine Blickrichtung von unten und in den Figuren 17 und 18 eine Blickrichtung von oben auf die zweite Führungseinheit 36 dargestellt ist. Die Blickrichtung in Figur 16 ist wiederum um 90° relativ zur Blickrichtung in Figur 15, die Blickrichtung in Figur 18 um 90° relativ zur Blickrichtung in Figur 17 gedreht.

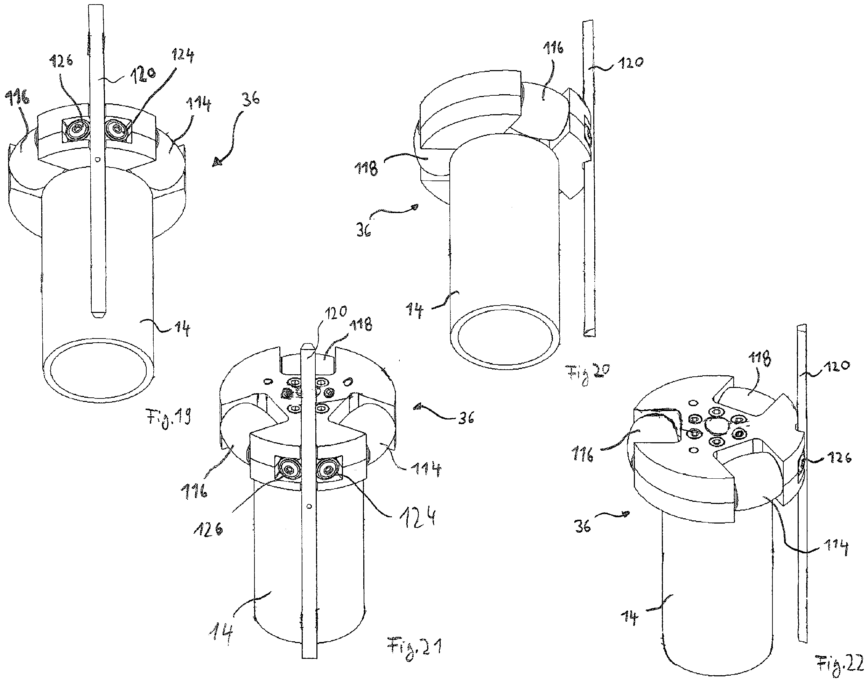

In den Figuren 19 bis 22 ist jeweils eine schematische, perspektivische Darstellung der zweiten Führungseinheit 36 nach den Figuren 15 bis 18 und einer Schiene 120 einer Verdrehsicherung des Führungssystems 100 dargestellt. In den Figuren 19 und 20 ist eine Blickrichtung von unten, in den Figuren 21 und 22 eine Blickrichtung von oben dargestellt. Die Blickrichtung in Figur 20 ist um 90° relativ zur Blickrichtung in Figur 19 und die Blickrichtung in Figur 22 um 90° relativ zur Blickrichtung in Figur 21 gedreht.

Im Folgenden wird der Aufbau des Führungssystems 100 gemäß der zweiten Ausführungsform bezugnehmend auf die Figuren 3 bis 22 beschrieben. In den Explosionsdarstellungen der Figuren 7 bis 10 sind das Innenrohr 14 und das Außenrohr 12 jeweils nur schematisch verkürzt dargestellt, um die Übersichtlichkeit der Figuren zu erhöhen.

Die erste Führungseinheit 16 weist insgesamt 6 Rollen 102 bis 112 auf, die an dem aus vier Scheiben gebildeten Grundkörper 18 um ihre Längsachsen drehbar gelagert sind. Hierbei sind die Rollen 102 bis 112 in zwei parallel zueinander angeordneten Ebenen angeordnet, wobei die Rollen 102, 104, 106 in einer ersten Ebene und die Rollen 108, 110, 112 in einer zweiten Ebene angeordnet sind. Zwei benachbarte Rollen 102 bis 112 einer Ebene weisen jeweils einen Winkelabstand von 120° zueinander auf, so dass die Rollen in einer Ebene gleichmäßig entlang des Umfangs verteilt sind.

Die Rollen 102 bis 106 der ersten Ebene sind relativ zu den Rollen 108 bis 112 er zweiten Ebene jeweils um 60° versetzt angeordnet, so dass, wenn man alle Rollen 102 bis 112 in eine Ebene projizieren würde, zwei benachbarte Rollen 102 bis 112 jeweils einen Winkelabstand von 60° zueinander aufweisen würden, so dass eine möglichst gleichmäßige Verteilung der Rollen 102 bis 112 über den gesamten Umfang und somit auch eine gleichmäßige Kraftübertragung über den gesamten Umfang erfolgt. Insbesondere wird über eine solche Anordnung einer Vielzahl von Rollen 102 bis 112 sichergestellt, dass die erste Führungseinheit 16, unabhängig davon, in welcher Richtung das Führungssystem 100 belastet wird, die Kräfte zuverlässig und sicher zwischen den beiden Rohren 12, 14 übertragen kann und somit die Leichtgängigkeit des Führungssystems 100 gewährleistet ist.

Die Mantelflächen der Rollen 102 bis 112 sind gewölbt ausgebildet und haben insbesondere den gleichen Krümmungsradius wie das Innenrohr 14 an seiner Außenseite 32. Somit wird erreicht, dass jede Rolle 102 bis 112 das Innenrohr 14 entlang einer Linie, und nicht nur an einem Punkt, kontaktiert. Somit wird die Kraft über einen größeren Bereich übertragen, so dass keine Spannungsspitzen auftreten.

Die zweite Führungseinheit 36 weist drei Rollen 114 bis 118 auf, die an dem aus zwei Scheiben gebildeten Grundkörper 38 um ihre Längsachsen drehbar gelagert sind. Die Rollen 114 bis 118 sind jeweils in einem Winkelabstand von 120° zueinander angeordnet, so dass die Rollen gleichmäßig um den gesamten Umfang verteilt sind. Die Mantelflächen 114 bis 118 sind gewölbt ausgebildet und haben insbesondere den gleichen Krümmungsradius wie die Innenseite 52 des Außenrohres 12, so dass die Rollen 114 bis 118 das Außenrohr 12 jeweils entlang einer Linie kontaktieren. Somit kann auch die zweite Führungseinheit 36 die Kraft gleichmäßig zwischen den Rohren 12, 14 übertragen , unabhängig davon, in welcher radialen Richtung die Kraft eingeleitet wird.

An der Innenseite 52 des Außenrohres 12 ist eine Schiene 120 fest angeordnet, die in eine komplementär zur Schiene 120 ausgebildete Aussparung 122 der zweiten Führungseinheit 36 eingreift. Die Aussparung 122 ist zumindest teilweise über zwei federnd an dem Grundkörper 38 gelagerten Führungsrollen 124, 126 begrenzt, die die Schiene 120 kontaktieren. Über den Eingriff der Schiene 120 in die Aussparung 122 ist eine Verdrehsicherung ausgebildet, über die verhindert wird, dass das Innenrohr 14 relativ zu dem Außenrohr 112 verdreht wird. Über die Führungsrollen 124, 126 wird eine sichere und leichtgängige Führung der Schiene 120 in der Aussparung 122 erreicht.

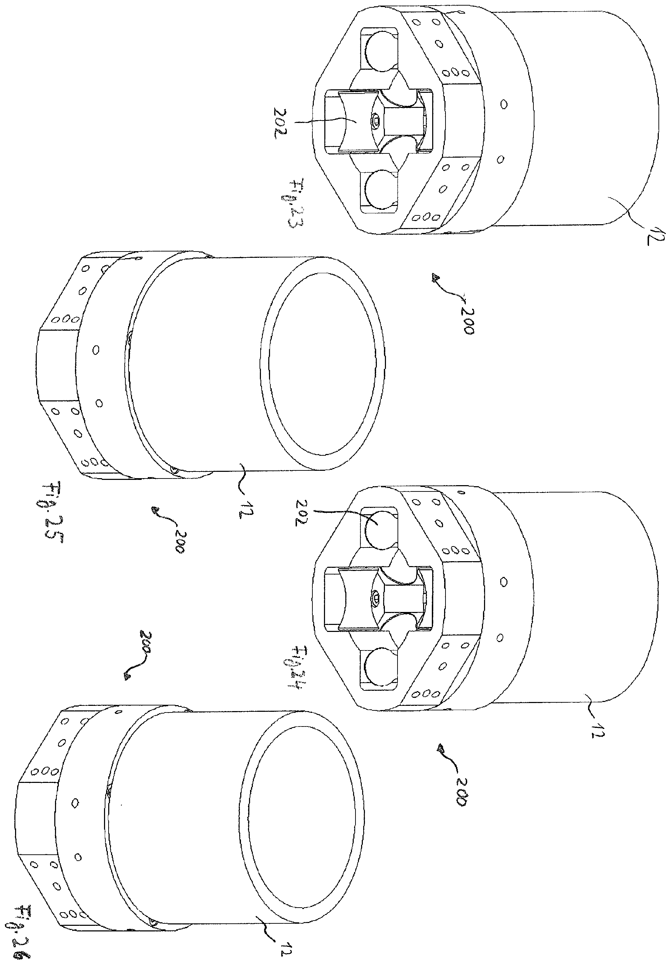

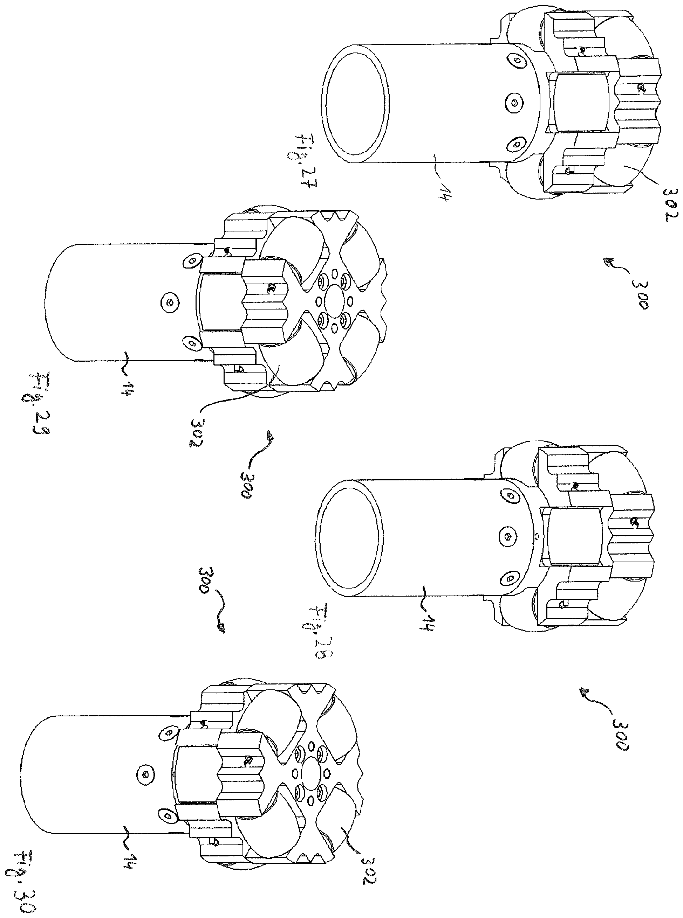

In den Figuren 23 bis 26 ist jeweils eine schematische, perspektivische Darstellung einer ersten Führungseinheit 200 gemäß einer dritten Ausführungsform dargestellt, wobei in den Figuren 23 und 24 jeweils eine Blickrichtung von unten und in den Figuren 25 und 26 jeweils eine Blickrichtung von oben dargestellt ist. Die Blickrichtung in Figur 24 ist um 90° relativ zur Blickrichtung in Figur 23, die Blickrichtung in Figur 26 um 90° relativ zur Blickrichtung in Figur 25 gedreht.

Im Unterschied zu der ersten Führungseinheit 36 gemäß der zweiten Ausführungsform umfasst die Führungseinheit 200 gemäß der dritten Ausführungsform insgesamt acht Rollen, von denen eine beispielhaft mit dem Bezugszeichen 202 bezeichnet ist. Die acht Rollen sind in zwei parallel zueinander und orthogonal zur Längsachse des Außenrohres 12 verlaufenden Ebenen angeordnet, wobei in jeder Ebene jeweils vier Rollen 202 mit einem Winkelabstand von 90° zueinander angeordnet sind. Die Rollen 202 der beiden Ebenen sind relativ zueinander um jeweils 45° versetzt angeordnet. Durch das Vorsehen von acht symmetrisch angeordneten Rollen 202 wird eine noch bessere gleichmäßigere Übertragung zwischen dem Innenrohr 14 und dem Außenrohr 12 erreicht, so dass eine besonders leichtgängige Führungseinheit 200 ausgebildet ist.

In den Figuren 27 bis 30 ist jeweils eine schematische, perspektivische Darstellung einer zweiten Führungseinheit 300 gemäß eines vierten Ausführungsbeispieles gezeigt, wobei in den Figuren 27 bis 28 eine Blickrichtung von unten und in den Figuren 29 und 30 eine Blickrichtung von oben dargestellt ist. Die Blickrichtung in Figur 28 ist um 90° relativ zur Blickrichtung in Figur 27 und die Blickrichtung in Figur 30 um 90° relativ zur Blickrichtung in Figur 29 gedreht.

Die zweite Führungseinheit 300 gemäß der vierten Ausführungsform umfasst acht Rollen, von denen eine beispielhaft mit dem Bezugszeichen 302 bezeichnet ist. Es sind jeweils vier Rollen 302 in einer gemeinsamen Ebene angeordnet, wobei die so entstehenden zwei Ebenen parallel zueinander angeordnet sind. Die benachbarten Rollen 302 haben jeweils einen Winkelabstand von 90° zueinander und die Rollen 302 beider Ebenen sind um 45° zueinander versetzt angeordnet. Somit ist die zweite Führungseinheit 300 ähnlich der ersten Führungseinheit 200 ausgebildet und ermöglicht unabhängig von der Belastungsrichtung eine gleichmäßige Kraftübertragung.

Die Rollen 302 sind insbesondere gewölbt ausgebildet und haben den gleichen Krümmungsradius wie die Innenseite 52 des Außenrohres 12.

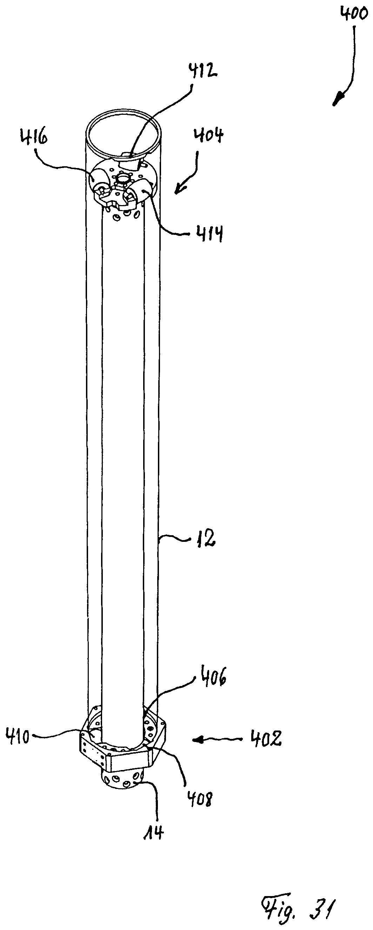

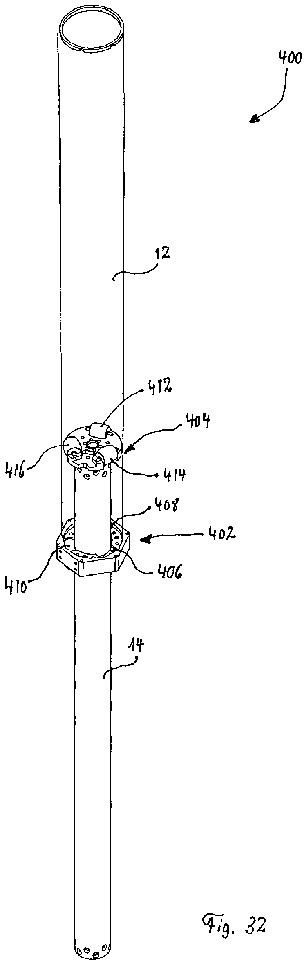

In den Figuren 31 und 32 ist jeweils eine schematische, perspektivische Darstellung eines Führungssystems 400 gemäß einer fünften Ausführungsform dargestellt. In Figur 31 ist der eingefahrene Zustand und in Figur 32 der ausgefahrene Zustand dargestellt.

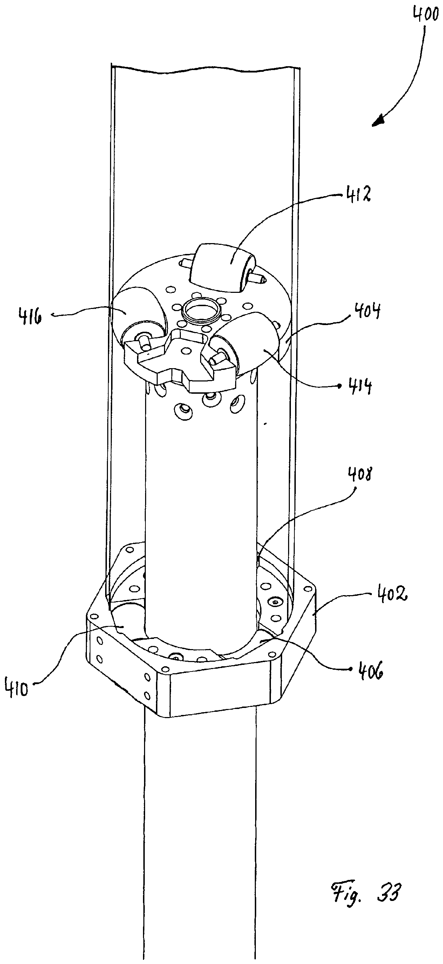

In Figur 33 ist ein Ausschnitt des Führungssystems 400 nach den Figuren 31 und 32 dargestellt, wobei die erste Führungseinheit 402 und die zweite Führungseinheit 404 vergrößert gezeigt sind.

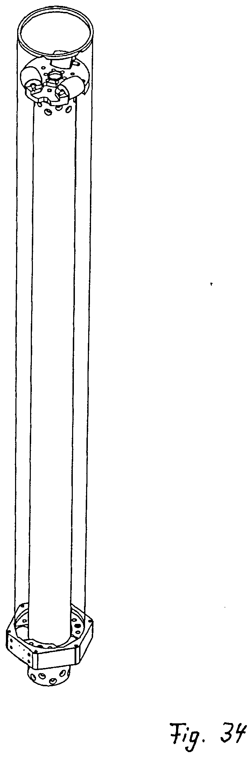

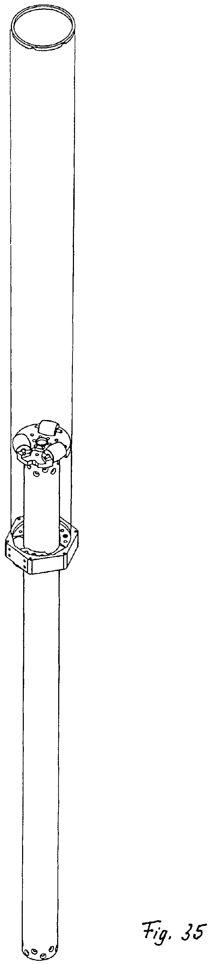

In den Figuren 34 und 35 sind weitere schematische, perspektivische Darstellungen des Führungssystems 400 nach den Figuren 31 bis 33 dargestellt, wobei die Figur 34 der Figur 31 ohne Bezugszeichen und die Figur 35 der Figur 32 ohne Bezugszeichen entspricht. Auf die Bezugszeichen wurde zur besseren Übersichtigkeit in den Figuren 34 und 35 verzichtet.

Die erste Führungseinheit 402 gemäß dem fünften Ausführungsbeispiel umfasst drei gewölbte Rollen 406 bis 410, die in einer gemeinsamen Ebene angeordnet sind und jeweils einen Winkelabstand von 120° zueinander aufweisen.

Auch die zweite Führungseinheit 404 gemäß dem fünften Ausführungsbeispiel umfasst drei gewölbte Rollen 412 bis 416, die ebenfalls in einer gemeinsamen Ebene und mit einem Winkelabstand von 120° zueinander angeordnet sind.

Das Innenrohr 14 ist insbesondere mit Hilfe einer nicht dargestellten Antriebseinheit relativ zum Außenrohr 12 verfahrbar, wobei diese Antriebseinheit insbesondere eine hydraulische oder pneumatische Antriebseinheit ist. Das Innenrohr 14 bildet insbesondere den Zylinder eines Arbeitszylinders, in dem ein Kolben angeordnet ist.

### Bezugszeichenliste

- 10, 100, 400: Führungssystem
- 12: Außenrohr
- 14: Innenrohr
- 16, 36, 200, 300, 402, 404: Führungseinheit
- 18, 38: Grundkörper
- 20, 22, 40, 42, 102 bis 118, 202, 302, 406 bis 416: Rolle
- 24, 26, 44, 46: Längsachse
- 28, 30, 48, 50: Mantelfläche
- 32: Außenseite
- 52: Innenseite
- 54, 56, 58, 60: Ende
- 120: Schiene
- 122: Aussparung
- 124, 126: Führungsrolle

## Patentansprüche

1. Teleskopierendes Führungssystem, mit einem Außenrohr (12), und mit einem zumindest teilweise innerhalb des Außenrohres (12) geführten Innenrohr (14), wobei an dem Außenrohr (12) eine erste Führungseinheit (16, 200, 402) angeordnet ist, die eine erste Rolle (20) und mindestens eine zweite Rolle (22) umfasst, die mit ihren Mantelflächen (28, 30) die Außenseite (32) des Innenrohres (14) kontaktieren, und wobei an dem Innenrohr (14) eine zweite Führungseinheit (36, 300, 404) angeordnet ist, die eine erste Rolle (40) und mindestens eine zweite Rolle (42) umfasst, die mit ihren Mantelflächen (48, 50) die Innenseite (52) des Außenrohres (12) kontaktieren, **dadurch gekennzeichnet, dass** als Verdrehsicherung bei dem Führungssystem an der Innenseite (52) des Außenrohres (12) eine in Längsrichtung des Außenrohres (12) verlaufende Schiene (120) angeordnet ist, und dass die zweite Führungseinheit (36, 300, 404) eine komplementär zur Schiene (120) ausgebildete Aussparung (122) aufweist, in die die Schiene (120) eingreift.

2. Teleskopierendes Führungssystem (10, 100, 400) nach Anspruch 1, **dadurch gekennzeichnet, dass** die Aussparung (122) zumindest teilweise durch zwei federnd gelagert Führungsrollen (124, 126) begrenzt ist, die die Schiene (120) kontaktieren.

3. Teleskopierendes Führungssystem (10, 100, 400) nach einem der vorangehenden Ansprüche , **dadurch gekennzeichnet, dass** die erste Führungseinheit (16, 200, 402) ortsfest an dem Außenrohr (12) und/oder die zweite Führungseinheit (36, 300, 404) ortsfest an dem Innenrohr (14) befestigt ist.

4. Teleskopierendes Führungssystem (10, 100, 400) nach einem der vorangehenden Ansprüche , **dadurch gekennzeichnet, dass** die erste Führungseinheit (16, 200, 402) mindestens eine weitere dritte Rolle (102 bis 118, 202, 302, 406 bis 416) umfasst, deren Mantelfläche die Außenseite (32) des Innenrohres (14) kontaktiert, und/oder dass die zweite Führungseinheit (36, 300, 404) mindestens eine weitere dritte Rolle (102 bis 118, 202, 302, 406 bis 416) umfasst, deren Mantelfläche die Innenseite (52) des Außenrohres (12) kontaktiert.

5. Teleskopierendes Führungssystem (10, 100, 400) nach Anspruch 4, **dadurch gekennzeichnet, dass** die erste Führungseinheit (16, 200, 402) mindestens eine weitere vierte Rolle (102 bis 118, 202, 302, 406 bis 416) umfasst, deren Mantelfläche die Außenseite (32) des Innenrohres (14) kontaktiert, und/oder dass die zweite Führungseinheit (36, 300, 404) mindestens eine weitere vierte Rolle (102 bis 118, 202, 302, 406 bis 416) umfasst, deren Mantelfläche die Innenseite (52) des Außenrohres (12) kontaktiert.

6. Teleskopierendes Führungssystem (10, 100, 400) nach einem der vorhergehenden Ansprüche, **dadurch gekennzeichnet, dass** die Längsachsen (24, 26) der Rollen (20, 22) der ersten Führungseinheit (16, 200, 402) in einer ersten Ebene liegen und/oder die Längsachsen (44, 46) der Rollen (40, 42) der zweiten Führungseinheit (36, 300, 404) in einer zweiten Ebene liegen.

7. Teleskopierendes Führungssystem (10, 100, 400) nach Anspruch 6, **dadurch gekennzeichnet, dass** die erste Ebene und/oder die zweite Ebene orthogonal zur Längsachse des Außenrohres (12) und/oder orthogonal zur Längsachse des Innenrohres (14) angeordnet sind.

8. Teleskopierendes Führungssystem (10, 100, 400) nach einem der vorhergehenden Ansprüche, **dadurch gekennzeichnet, dass** benachbarte Rollen (20, 22, 102 bis 118, 202, 302, 406 bis 416) der ersten Führungseinheit (16, 200, 402) und/oder benachbarte Rollen (40, 42, 102 bis 118, 202, 302, 406 bis 416) der zweiten Führungseinheit (36, 300, 404) jeweils den gleichen Winkelabstand zueinander haben.

9. Teleskopierendes Führungssystem (10, 100, 400) nach einem der Ansprüche 1 bis 3, **dadurch gekennzeichnet, dass** die erste Führungseinheit (16, 200, 402) und/oder die zweite Führungseinheit (36, 300, 404) jeweils eine dritte und mindestens eine vierte Rolle (102 bis 118, 202, 302, 406 bis 416) umfassen, dass die erste und die zweite Rolle (20, 22, 40, 42, 102 bis 118, 202, 302, 406 bis 416) jeweils in einer dritten Ebene und die dritte und die vierte Rolle (20, 22, 40, 42, 102 bis 118, 202, 302, 406 bis 416) jeweils in einer vierten Ebene angeordnet sind, und dass die dritten Ebenen und die vierten Ebenen jeweils parallel zueinander sind.

10. Teleskopierendes Führungssystem (10, 100, 400) nach Anspruch 9, **dadurch gekennzeichnet, dass** die erste Führungseinheit (16, 200, 402) und/oder die zweite Führungseinheit (36, 300, 404)jeweils eine fünfte und mindestens eine sechste Rollen (20, 22, 40, 42, 102 bis 118, 202, 302, 406 bis 416) umfassen, und dass die fünfte Rolle (20, 22, 40, 42, 102 bis 118, 202, 302, 406 bis 416) jeweils in der dritten Ebene und die sechste Rolle (20, 22, 40, 42, 102 bis 118, 202, 302, 406 bis 416) jeweils in der vierten Ebene angeordnet ist.

11. Teleskopierendes Führungssystem (10, 100, 400) nach Anspruch 10, **dadurch gekennzeichnet, dass** die erste Führungseinheit (16, 200, 402) und/oder die zweite Führungseinheit (36, 300, 404) jeweils eine siebte und mindestens eine achte Rolle (20, 22, 40, 42, 102 bis 118, 202, 302, 406 bis 416) umfassen, und dass die siebte Rolle (20, 22, 40, 42, 102 bis 118, 202, 302, 406 bis 416) jeweils in der dritten Ebene und die achte Rolle (20, 22, 40, 42, 102 bis 118, 202, 302, 406 bis 416) jeweils in der vierten Ebene angeordnet ist.

12. Teleskopierendes Führungssystem (10, 100, 400) nach einem der vorhergehenden Ansprüche, **dadurch gekennzeichnet, dass** mindestens eine Rolle (20, 22, 102 bis 118, 202, 302, 406 bis 416) der ersten Führungseinheit (16, 200, 402), vorzugsweise alle Rollen (20, 22, 102 bis 118, 202, 302, 406 bis 416) der ersten Führungseinheit (16, 200, 402), und/oder mindestens eine Rolle (40, 42, 102 bis 118, 202, 302, 406 bis 416) der zweiten Führungseinheit (36, 300, 404), vorzugsweise alle Rollen (40, 42, 102 bis 118, 202, 302, 406 bis 416) der zweiten Führungseinheit (36, 300, 404), eine gewölbte Mantelfläche haben.

13. Teleskopierendes Führungssystem (10, 100, 400) nach Anspruch 12, **dadurch gekennzeichnet, dass** die Rollen (20, 22, 102 bis 118, 202, 302, 406 bis 416) der ersten Führungseinheit (16, 200, 402) derart gewölbt sind, dass ihre Mantelflächen (24, 26) die Außenseite (32) des Innenrohres (14) zumindest in einem Teilbereich entlang einer Linie kontaktiert, und/oder dass die Rollen (40, 42, 102 bis 118, 202, 302, 406 bis 416) der zweiten Führungseinheit (36, 300, 404) derart gewölbt sind, dass ihre Mantelflächen (44, 46) die Innenseite (52) des Außenrohres (12) zumindest in einem Teilbereich entlang einer Linie kontaktiert.

14. Teleskopierendes Führungssystem (10, 100, 400) nach Anspruch 12 oder 13, **dadurch gekennzeichnet, dass** die Mantelflächen (24, 26) der Rollen (20, 22, 102 bis 118, 202, 302, 406 bis 416) der ersten Führungseinheit (36, 200, 402) konkav und/oder die Mantelflächen (44, 46) der Rollen (40, 42, 102 bis 118, 202, 302, 406 bis 416) der zweiten Führungseinheit (36, 300, 404) konvex sind.

15. Teleskopierendes Führungssystem (10, 100, 400) nach einem der vorhergehenden Ansprüche, **dadurch gekennzeichnet, dass** die erste Führungseinheit (16, 200, 402) an einem ersten Ende (54) des Außenrohres (12) angeordnet ist, und dass die zweite Führungseinheit (36, 300, 404) an einem dem ersten Ende (60) des Außenrohres (12) gegenüberliegenden zweiten Ende des Innenrohres (14) angeordnet.

16. Teleskopierendes Führungssystem (10, 100, 400) nach einem der vorhergehenden Ansprüche, **dadurch gekennzeichnet, dass** die erste Führungseinheit (16, 200, 402) einen dreh- und ortsfest an dem Außenrohr (12) befestigten Grundkörper (18), an dem die Rollen (20, 22, 102 bis 118, 202, 302, 406 bis 416) der ersten Führungseinheit (16, 200, 402) um ihre Längsachsen (24, 26) drehbar gelagert sind, und/oder die zweite Führungseinheit (36, 300, 404) einen dreh- und ortsfest an dem Innenrohr (14) befestigten Grundkörper (38), an dem die Rollen (40, 42, 102 bis 118, 202, 302, 406 bis 416) der zweiten Führungseinheit (36, 300, 404) um ihre Längsachse (44, 46) drehbar gelagert sind, umfasst.

17. Teleskopierendes Führungssystem (10, 100, 400) nach einem der vorhergehenden Ansprüche, **dadurch gekennzeichnet, dass** die erste Führungseinheit (16, 200, 402) und/oder die zweite Führungseinheit (36, 300, 404) jeweils als drehfest gelagertes omni wheel ausgebildet sind.

## Claims

1. A telescoping guiding system, having an outer tube (12) and an inner tube (14), guided at least partially within the outer tube (12), wherein arranged on the outer tube (12) is a first guiding unit (16, 200, 402), comprising a first roller (20) and at least one second roller (22), contacting the outer side (32) of the inner tube (14) with their lateral surfaces (28, 30), and wherein arranged on the inner tube (14) is a second guiding unit (36, 300, 404), comprising a first roller (40) and at least one second roller (42), contacting the inner side (52) of the outer tube (12) with their lateral surfaces (48, 50), **characterized in that** a rail (120) is arranged as an anti-rotation device for the guiding system on the inner side (52) of the outer tube (12), extending in the longitudinal direction of the outer tube (12), and that the second guiding unit (36, 300, 404) has a recess (122), formed complementary to the rail (120), into which the rail (120) engages.

2. The telescoping guiding system (10, 100, 400) according to claim 1, **characterized in that** the recess (122) is at least partially bounded by two spring-mounted guiding rollers (124, 126) that contact the rail (120).

3. The telescoping guiding system (10, 100, 400) according to any one of the preceding claims, **characterized in that** the first guiding unit (16, 200, 402) is immovably attached to the outer tube (12) and/or the second guiding unit (36, 300, 404) is immovably attached to the inner tube (14).

4. The telescoping guiding system (10, 100, 400) according to any one of the preceding claims, **characterized in that** the first
guiding unit (16, 200, 402) comprises at least one additional third roller (102 to 118, 202, 302, 406 to 416), the lateral surface of which contacts the outer side (32) of the inner tube (14), and/or that the second guiding unit (36, 300, 404) comprises at least one additional third roller(102 to 118, 202, 302, 406 to 416), the lateral surface of which contacts the inner side (52) of the outer tube (12).

5. The telescoping guiding system (10, 100, 400) according to claim 4, **characterized in that** the first guiding unit (16, 200, 402) comprises at least one additional fourth roller (102 to 118, 202, 302, 406 to 416), the lateral surface of which contacts the outer side (32) of the inner tube (14), and/or that the second guiding unit (36, 300, 404) comprises at least one additional fourth roller(102 to 118, 202, 302, 406 to 416), the lateral surface of which contacts the inner side (52) of the outer tube (12).

6. The telescoping guiding system (10, 100, 400) according to any one of the preceding claims, **characterized in that** the longitudinal axes (24, 26) of the rollers (20, 22) of the first guiding unit (16, 200, 402) are disposed in a first plane and/or the longitudinal axes (44, 46) of the rollers (40, 42) of the second guiding unit (36, 300, 404) are disposed in a second plane.

7. The telescoping guiding system (10, 100, 400) according to claim 6, **characterized in that** the first plane and/or the second plane are arranged orthogonally to the longitudinal axis of the outer tube (12) and/or orthogonally to the longitudinal axis of the inner tube (14).

8. The telescoping guiding system (10, 100, 400) according to any one of the preceding claims, **characterized in that** adjacent rollers (20, 22, 102 to 118, 202, 302, 406 to 416) of the first guiding unit (16, 200, 402) and/or adjacent rollers (40, 42, 102 to 118, 202, 302, 406 to 416) of the second guiding unit (36, 300, 404) each have the same angular distance from one another.

9. The telescoping guiding system (10, 100, 400) according to any one of the claims 1 to 3, **characterized in that** the first guiding unit (16, 200, 402) and/or the second guiding unit (36, 300, 404) each comprise a third and at least one fourth roller (102 to 118, 202, 302, 406 to 416), that the first and second rollers (20, 22, 40, 42, 102 to 118, 202, 302, 406 to 416) are each disposed in a third plane, and that the third and fourth rollers (20, 22, 40, 42, 102 to 118, 202, 302, 406 to 416) are each disposed in a fourth plane, and that the third planes and the fourth planes are each parallel to one another.

10. The telescoping guiding system (10, 100, 400) according to claim 9, **characterized in that** the first guiding unit (16, 200, 402) and/or the second guiding unit (36, 300, 404) each comprise a fifth and at least one sixth roller (20, 22, 40, 42, 102 to 118, 202, 302, 406 to 416), and that the fifth roller (20, 22, 40, 42, 102 to 118, 202, 302, 406 to 416) are each disposed in the third plane, and the sixth roller (20, 22, 40, 42, 102 to 118, 202, 302, 406 to 416) are each disposed in the fourth plane.

11. The telescoping guiding system (10, 100, 400) according to claim 10, **characterized in that** the first guiding unit (16, 200, 402) and/or the second guiding unit (36, 300, 404) each comprise a seventh and at least one eighth roller (20, 22, 40, 42, 102 to 118, 202, 302, 406 to 416), and that the seventh roller (20, 22, 40, 42, 102 to 118, 202, 302, 406 to 416) are each disposed in the third plane, and the eighth roller (20, 22, 40, 42, 102 to 118, 202, 302, 406 to 416) are each disposed in the fourth plane.

12. The telescoping guiding system (10, 100, 400) according to any one of the preceding claims, **characterized in that** at least one roller (20, 22, 102 to 118, 202, 302, 406 to 416) of the first guiding unit (16, 200, 402), preferably all the rollers (20; 22, 102 to 118, 202, 302, 406 to 416) of the first guiding unit (16, 200, 402), and/or at least one roller (40, 42, 102 to 118, 202, 302, 406 to 416) of the second guiding unit (36, 300, 404), preferably all the rollers (40, 42, 102 to 118, 202, 302, 406 to 416) of the second guiding unit (36, 300, 404), have a curved lateral surface.

13. The telescoping guiding system (10, 100, 400) according to claim 12, **characterized in that** the rollers (20, 22, 102 to 118, 202, 302, 406 to 416) of the first guiding unit (16, 200, 402) are curved in such a way that their lateral surfaces (24, 26) contact the outer side (32) of the inner tube (14) in at least a partial section along a line, and/or that the rollers (40, 42, 102 to 118, 202, 302, 406 to 416) of the second guiding unit (36, 300, 404) are curved in such a way that their lateral surfaces (44, 46) contact the inner side (52) of the outer tube (12) in at least a partial section along a line.

14. The telescoping guiding system (10, 100, 400) according to claim 12 or 13, **characterized in that** the lateral surfaces (24, 26) of the rollers (20, 22, 102 to 118, 202, 302, 406 to 416) of the first guiding unit (36, 200, 402) are concave and/or the lateral surfaces (44, 46) of the rollers (40, 42, 102 to 118, 202, 302, 406 to 416) of the second guiding unit (36, 300, 404) are convex.

15. The telescoping guiding system (10, 100, 400) according to any one of the preceding claims, **characterized in that** the first guiding unit (16, 200, 402) is arranged at a first end (54) of the outer tube (12), and that the second guiding unit (36, 300, 404) is arranged at a second end of the inner tube (14) opposite the first end (54) of the outer tube (12).

16. The telescoping guiding system (10, 100, 400) according to any one of the preceding claims, **characterized in that** the first guiding unit (16, 200, 402) comprises a base body (18), rotationally fixed and immovably attached to the outer tube (12), on which the rollers (20, 22, 102 to 118, 202, 302, 406 to 416) of the first guiding unit (16, 200, 402) are mounted rotatably about their longitudinal axes (24, 26), and/or the second guiding unit (36, 300, 404) comprises a base body (38), rotationally fixed and immovably attached to the inner tube (14), on which the rollers (40, 42, 102 to 118, 202, 302, 406 to 416) of the second guiding unit (36, 300, 404) are mounted rotatably about their longitudinal axis (44, 46).

17. The telescoping guiding system (10, 100, 400) according to any one of the preceding claims, **characterized in that** the first guiding unit (16, 200, 402) and/or the second guiding unit (36, 300, 404) are each formed as a rotationally fixed omni wheel.

## Revendications

1. Système de guidage télescopique, avec un tube extérieur (12), et avec un tube intérieur (14) guidé au moins partiellement à l'intérieur du tube extérieur (12), une première unité de guidage (16, 200, 402) comprenant un premier galet (20) et au moins un deuxième galet (22) étant disposée sur le tube extérieur (12), les surfaces d'enveloppe (28, 30) desdits galets étant en contact avec la face extérieure (32) du tube intérieur (14), une deuxième unité de guidage (36, 300, 404) comprenant un premier galet (40) et au moins un deuxième galet (42) étant disposée sur le tube intérieur (14), les surfaces d'enveloppe (48, 50) desdits galets étant en contact avec la face intérieure (52) du tube extérieur (12), **caractérisé en ce qu'**un rail (120) s'étendant dans le sens longitudinal du tube extérieur (12) est disposé comme sécurité antitorsion sur la face intérieure (52) du tube extérieur (12) du système de guidage, et **en ce que** la deuxième unité de guidage (36, 300, 404) présente un évidement (122) de forme complémentaire au rail (120) dans lequel le rail (120) s'engrène.

2. Système de guidage télescopique (10, 100, 400) selon la revendication 1, **caractérisé en ce que** l'évidement (122) est limité au moins en partie par deux galets de guidage (124, 126) montés élastiquement qui sont en contact avec le rail (120).

3. Système de guidage télescopique (10, 100, 400) selon l'une quelconque des revendications précédentes, **caractérisé en ce que** la première unité de guidage (16, 200, 402) est fixée stationnairement sur le tube extérieur (12) et/ou la deuxième unité de guidage (36, 300, 404) est fixée à demeure sur le tube intérieur (14).

4. Système de guidage télescopique (10, 100, 400) selon l'une quelconque des revendications précédentes, **caractérisé en ce que** la première unité de guidage (16, 200, 402) comprend au moins un troisième autre galet (102 à 118, 202, 302, 406 à 416) dont la surface d'enveloppe est en contact avec la face extérieure (32) du tube intérieur (14), et/ou **en ce que** la deuxième unité de guidage (36, 300, 404) comprend au moins un troisième autre galet (102 à 118, 202, 302, 406 à 416) dont la surface d'enveloppe est en contact avec la face intérieure (52) du tube extérieur (12).

5. Système de guidage télescopique (10, 100, 400) selon la revendication 4, **caractérisé en ce que** la première unité de guidage (16, 200, 402) comprend au moins un quatrième autre galet (102 à 118, 202, 302, 406 à 416) dont la surface d'enveloppe est en contact avec la face extérieure (32) du tube intérieur (14), et/ou **en ce que** la deuxième unité de guidage (36, 300, 404) comprend au moins un quatrième autre galet (102 à 118, 202, 302, 406 à 416) dont la surface d'enveloppe est en contact avec la face intérieure (52) du tube extérieur (12).

6. Système de guidage télescopique (10, 100, 400) selon l'une quelconque des revendications précédentes, **caractérisé en ce que** les axes longitudinaux (24, 26) des galets (20, 22) de la première unité de guidage (16, 200, 402) sont situés dans un premier plan et/ou que les axes longitudinaux (44, 46) des galets (40, 42) de la deuxième unité de guidage (36, 300, 404) sont situés dans un deuxième plan.

7. Système de guidage télescopique (10, 100, 400) selon la revendication 6, **caractérisé en ce que** le premier plan et/ou le deuxième plan sont disposés de manière orthogonale à l'axe longitudinal du tube extérieur (12) et/ou de manière orthogonale à l'axe longitudinal du tube intérieur (14).

8. Système de guidage télescopique (10, 100, 400) selon l'une quelconque des revendications précédentes, **caractérisé en ce que** des galets voisins (20, 22, 102 à 118, 202, 302, 406 à 416) de la première unité de guidage (16, 200, 402) et/ou des galets voisins (40, 42, 102 à 118, 202, 302, 406 à 416) de la deuxième unité de guidage (36, 300, 404) présentent respectivement le même écart angulaire.

9. Système de guidage télescopique (10, 100, 400) selon l'une quelconque des revendications 1 à 3, **caractérisé en ce que** la première unité de guidage (16, 200, 402) et/ou la deuxième unité de guidage (36, 300, 404) comprennent respectivement un troisième et au moins un quatrième galets (102 à 118, 202, 302, 406 à 416), **en ce que** le premier et le deuxième galets (20, 22, 40, 42, 102 à 118, 202, 302, 406 à 416) sont respectivement disposés dans un troisième plan et le troisième et quatrième galets (20, 22, 40, 42, 102 à 118, 202, 302, 406 à 416) sont respectivement disposés dans un quatrième plan, et **en ce que** les troisièmes plans et les quatrièmes plans sont respectivement parallèles les uns aux autres.

10. Système de guidage télescopique (10, 100, 400) selon la revendication 9, **caractérisé en ce que** la première unité de guidage (16, 200, 402) et/ou la deuxième unité de guidage (36, 300, 404) comprennent respectivement un cinquième et au moins un sixième galets (20, 22, 40, 42, 102 à 118, 202, 302, 406 à 416), et **en ce que** le cinquième galet (20, 22, 40, 42, 102 à 118, 202, 302, 406 à 416) est respectivement disposé dans le troisième plan et le sixième galet (20, 22, 40, 42, 102 à 118, 202, 302, 406 à 416) est respectivement disposé dans le quatrième plan.

11. Système de guidage télescopique (10, 100, 400) selon la revendication 10, **caractérisé en ce que** la première unité de guidage (16, 200, 402) et/ou la deuxième unité de guidage (36, 300, 404) comprennent respectivement un septième et au moins un huitième galets (20, 22, 40, 42, 102 à 118, 202, 302, 406 à 416), et **en ce que** le septième galet (20, 22, 40, 42, 102 à 118, 202, 302, 406 à 416) est respectivement disposé dans le troisième plan et le huitième galet (20, 22, 40, 42, 102 à 118, 202, 302, 406 à 416) est respectivement disposé dans le quatrième plan.

12. Système de guidage télescopique (10, 100, 400) selon l'une quelconque des revendications précédentes, **caractérisé en ce qu'**au moins un galet (20, 22, 102 à 118, 202, 302, 406 à 416) de la première unité de guidage (16, 200, 402), de préférence tous les galets (20, 22, 102 à 118, 202, 302, 406 à 416) de la première unité de guidage (16, 200, 402), et/ou au moins un galet (40, 42, 102 à 118, 202, 302, 406 à 416) de la deuxième unité de guidage (36, 300, 404), de préférence tous les galets (40, 42, 102 à 118, 202, 302, 406 à 416) de la deuxième unité de guidage (36, 300, 404) ont une surface d'enveloppe bombée.

13. Système de guidage télescopique (10, 100, 400) selon la revendication 12, **caractérisé en ce que** les galets (20, 22, 102 à 118, 202, 302, 406 à 416) de la première unité de guidage (16, 200, 402) sont bombés de telle sorte que leurs surfaces d'enveloppe (24, 26) sont en contact avec la face extérieure (32) du tube intérieur (14) au moins sur une zone partielle le long d'une ligne, et/ou **en ce que** les galets (40, 42, 102 à 118, 202, 302, 406 à 416) de la deuxième unité de guidage (36, 300, 404) sont bombés de telle sorte que leurs surfaces d'enveloppe (44, 46) sont en contact avec la face intérieure (52) du tube extérieur (12) au moins sur une zone partielle le long d'une ligne.

14. Système de guidage télescopique (10, 100, 400) selon la revendication 12 ou 13, **caractérisé en ce que** les surfaces d'enveloppe (24, 26) des galets (20, 22, 102 à 118, 202, 302, 406 à 416) de la première unité de guidage (36, 200, 402) sont concaves et/ou les surfaces d'enveloppe (44, 46) des galets (40, 42, 102 à 118, 202, 302, 406 à 416) de la deuxième unité de guidage (36, 300, 404) sont convexes.

15. Système de guidage télescopique (10, 100, 400) selon l'une quelconque des revendications précédentes, **caractérisé en ce que** la première unité de guidage (16, 200, 402) est disposée à une première extrémité (54) du tube extérieur (12), et **en ce que** la deuxième unité de guidage (36, 300, 404) est disposée à une deuxième extrémité du tube intérieur (14) opposée à la première extrémité (60) du tube extérieur (12).

16. Système de guidage télescopique (10, 100, 400) selon l'une quelconque des revendications précédentes, **caractérisé en ce que** la première unité de guidage (16, 200, 402) comprend un corps de base (18) fixé de manière stationnaire et solidaire en rotation sur le tube extérieur (12) et sur lequel les galets (20, 22, 102 à 118, 202, 302, 406 à 416) de la première unité de guidage (16, 200, 402) sont montés de manière pivotante sur leurs axes longitudinaux (24, 26), et/ou la deuxième unité de guidage (36, 300, 404) comprend un corps de base (38) fixé de manière stationnaire et solidaire en rotation sur le tube intérieur (14) et sur lequel les galets (40, 42, 102 à 118, 202, 302, 406 à 416) de la deuxième unité de guidage (36, 300, 404) sont montés de manière pivotante sur leur axe longitudinal (44, 46).

17. Système de guidage télescopique (10, 100, 400) selon l'une quelconque des revendications précédentes, **caractérisé en ce que** la première unité de guidage (16, 200, 402) et/ou la deuxième unité de guidage (36, 300, 404) sont conçues respectivement comme une roue holonome montée de manière solidaire en rotation.
